# EUROPEAN PATENT SPECIFICATION

(11) **EP 4 455 506 B1**
(45) Date of publication and mention of the grant of the patent: **15.07.2026**
(21) Application number: 22911243.8
(22) Date of filing: 20.12.2022
(51) Int. Cl.: F16F 15/134, F16F 15/139

(54) **DAMPER**
DÄMPFER
AMORTISSEUR

(30) Priority: 23.12.2021 JP 2021209933
(43) Date of publication of application: 30.10.2024
(73) Proprietor: AISIN CORPORATION, Kariya-shi, Aichi 448-8650 (JP)
(72) Inventor: KATAOKA, Naoya, Kariya-shi, Aichi 448-8650 (JP)
(74) Representative: Winter, Brandl - Partnerschaft mbB
(86) International application number: PCT/JP2022/046967
(87) International publication number: WO 2023/120541

(56) References cited:
- JP-A- 2016 098 954
- JP-A- 2016 114 193
- JP-A- 2018 096 534
- US-A- 4 596 535
- US-A- 5 769 199
- US-A1- 2010 243 404
- US-B2- 10 753 424

## Description

### TECHNICAL FIELD

The present invention relates to a damper.

### BACKGROUND ART

Conventionally, there is a known damper including a first rotary element, a second rotary element, a third rotary element, axial positioning members (a friction element and a disc spring) for the first rotary element and the second rotary element, and axial positioning members (a friction element and a disc spring) for the second rotary element and the third rotary element (Patent Literature 1).

### CITATION LIST

### PATENT LITERATURE

Patent Literature 1: JP 2016-098954 A

Document US5769199 also discloses a damper with three rotary elements, two elastic elements and two friction elements.

### SUMMARY OF INVENTION

### TECHNICAL PROBLEM

In this type of damper, positioning of a first rotary element and a second rotary element in an axial direction and positioning of the second rotary element and a third rotary element in the axial direction are performed by different positioning members. Thus, there has been a problem that a larger number of components are required and the configuration becomes complex.

Therefore, an aspect of the present invention provides, for example, a novel damper that can simplify a configuration for positioning a first rotary element, a second rotary element, and a third rotary element in an axial direction.

### SOLUTIONS TO PROBLEM

A damper according to the present invention includes: a first rotary element provided to be rotatable around a rotation center, the first rotary element including a first face and a second face, the first face facing in one direction in an axial direction of the rotation center, the second face being located on the one direction side with respect to the first face and facing in an other direction opposite to the one direction; a second rotary element provided to be rotatable around the rotation center, the second rotary element including a wall portion located between the first face and the second face in the axial direction; a third rotary element provided to be rotatable around the rotation center, the third rotary element including a third face and a fourth face, the third face being located between the wall portion and the first face in the axial direction, the fourth face being located between the wall portion and the second face in the axial direction; a first elastic element interposed between the first rotary element and the third rotary element, the first elastic element being configured to elastically expand and contract in a circumferential direction around the rotation center; a second elastic element interposed between the second rotary element and the third rotary element, the second elastic element being configured to elastically expand and contract in a circumferential direction around the rotation center; a first friction element provided to be rotatable around the rotation center integrally with the second rotary element, the first friction element including a fifth face and a sixth face, the fifth face being located on the one direction side with respect to the first face and being slidable on the first face, the sixth face being located on the one direction side with respect to the third face and being slidable on the third face; a second friction element provided to be rotatable around the rotation center integrally with the second rotary element, the second friction element including a seventh face and an eighth face, the seventh face being located on the other direction side with respect to the second face and being slidable on the second face, the eighth face being located on the other direction side with respect to the fourth face and being slidable on the fourth face; and a third elastic element interposed between one of the first friction element and the second friction element and the wall portion, the third elastic element causing the first face and the fifth face to be pressed against each other and causing the second face and the seventh face to be pressed against each other.

According to such a configuration, the third elastic element causes the first face of the first rotary element and the fifth face of the first friction element to be pressed against each other, and causes the second face of the first rotary element and the seventh face of the second friction element to be pressed against each other, whereby the first face and the fifth face come into contact with each other, and the second face and the seventh face come into contact with each other. Accordingly, relative positioning of the first rotary element and the second rotary element in the axial direction is performed. Moreover, by allowing the third face of the third rotary element and the sixth face of the first friction element to come into contact with each other in the axial direction, or by allowing the fourth face of the third rotary element and the eighth face of the second friction element to come into contact with each other in the axial direction, relative positioning of the second rotary element and the third rotary element in the axial direction is performed. That is, in the above configuration, the first friction element, the second friction element, and the third elastic element are used for both positioning of the first rotary element and the second rotary element in the axial direction and positioning of the second rotary element and the third rotary element in the axial direction. Thus, according to the above configuration, it is possible to reduce the number of components included in the configuration for positioning the first rotary element, the second rotary element, and the third rotary element in the axial direction, as compared with a configuration in which the first friction element, the second friction element, and the third elastic element are not used for both positioning of the first rotary element and the second rotary element in the axial direction and positioning of the second rotary element and the third rotary element in the axial direction. Therefore, it is possible to simplify the configuration for positioning the first rotary element, the second rotary element, and the third rotary element in the axial direction.

In the damper, for example, the third elastic element includes a first end portion in contact with the wall portion and a second end portion in contact with the one of the first friction element and the second friction element, and the second end portion is aligned in the axial direction with the first face, the second face, the fifth face, and the seventh face.

According to such a configuration, the second end portion of the third elastic element is aligned in the axial direction with the first face, the second face, the fifth face, and the seventh face. Thus, equalization is easily achieved between a surface pressure between the first face and the fifth face and a surface pressure between the second face and the seventh face. Therefore, it is possible to stabilize frictional torque between the first rotary element and the second rotary element (specifically, frictional torque between each of the first friction element and the second friction element and the second rotary element).

In the damper, for example, the first rotary element positions the rotation center in the first friction element, in a radial direction, and positions the second friction element in the radial direction.

According to such a configuration, relative positional accuracy in the radial direction between the first friction element and the second friction element is improved, as compared with a configuration in a case where the first friction element and the second friction element are positioned in the radial direction by respective different members.

In the damper, for example, the one of the first friction element and the second friction element is provided with a recessed portion that is recessed in a direction away from the wall portion from a face on the wall portion side of the one of the first friction element and the second friction element, and that receives the third elastic element.

According to such a configuration, the thickness of the damper in the axial direction can be reduced as compared with a configuration in which the recessed portion is not provided.

The damper is, for example, allowed to be changed between a state in which a gap exists between the third face and the sixth face and a state in which the third face and the sixth face are in contact with each other, and is, for example, allowed to be changed between a state in which a gap exists between the fourth face and the eighth face and a state in which the fourth face and the eighth face are in contact with each other.

According to such a configuration, by allowing the third face of the third rotary element and the sixth face of the first friction element to come into contact with each other in the axial direction, or by allowing the fourth face of the third rotary element and the eighth face of the second friction element to come into contact with each other in the axial direction, relative positioning of the second rotary element and the third rotary element in the axial direction can be performed.

In the damper, for example, the first friction element includes a ninth face facing outward in the radial direction, the second friction element includes a tenth face facing outward in the radial direction, and the first rotary element includes a first inner peripheral portion and a second inner peripheral portion, the first inner peripheral portion being in contact with the ninth face and positioning the first friction element in the radial direction, the second inner peripheral portion being in contact with the tenth face and positioning the second friction element in the radial direction.

According to such a configuration, the first friction element and the second friction element can be respectively positioned in the radial direction by the first inner peripheral portion and the second inner peripheral portion of the first rotary element.

### BRIEF DESCRIPTION OF DRAWINGS

FIG. 1 is an exemplary front view of a damper according to an embodiment as viewed in an axial direction.
FIG. 2 is a cross-sectional view taken along line II-II of FIG. 1.
FIG. 3 is a cross-sectional view taken along line III-III of FIG. 1.
FIG. 4 is an enlarged view of part IV of FIG. 2.

### DESCRIPTION OF EMBODIMENT

Hereinafter, an exemplary embodiment of the present invention is disclosed. The configurations of the embodiment described below, and the operations and results (effects) provided by the configurations are examples. The present invention can also be realized by configurations other than those disclosed in the following embodiment. Moreover, according to the present invention, it is possible to obtain at least one of various effects (including derivative effects) obtained by the configurations.

Note that in the following description, for convenience, a side closer to an engine (not shown) is referred to as front, and a side farther from the engine is referred to as rear. Front and rear in the following description do not necessarily coincide with front and rear in a state of being mounted in a vehicle.

Moreover, hereinafter, an axial direction of the rotation center Ax is simply referred to as an axial direction, a radial direction from the rotation center Ax is simply referred to as a radial direction, and a circumferential direction around the rotation center Ax is simply referred to as a circumferential direction. The rotation center Ax is also referred to as a central axis.

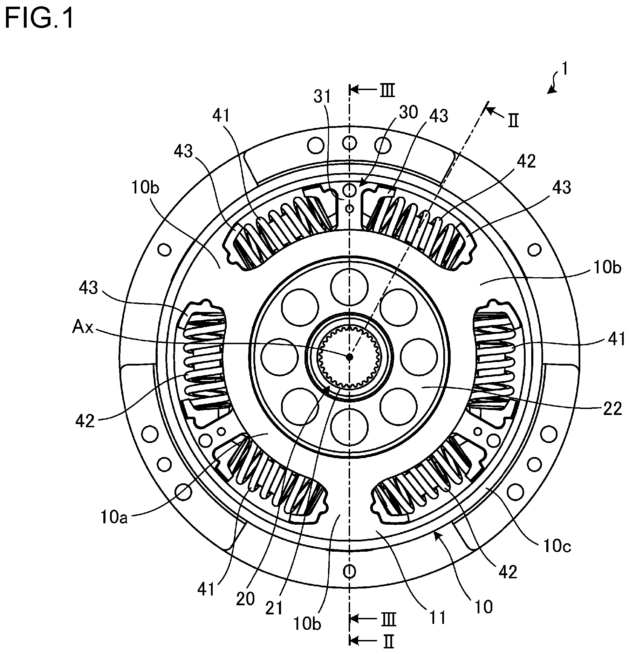

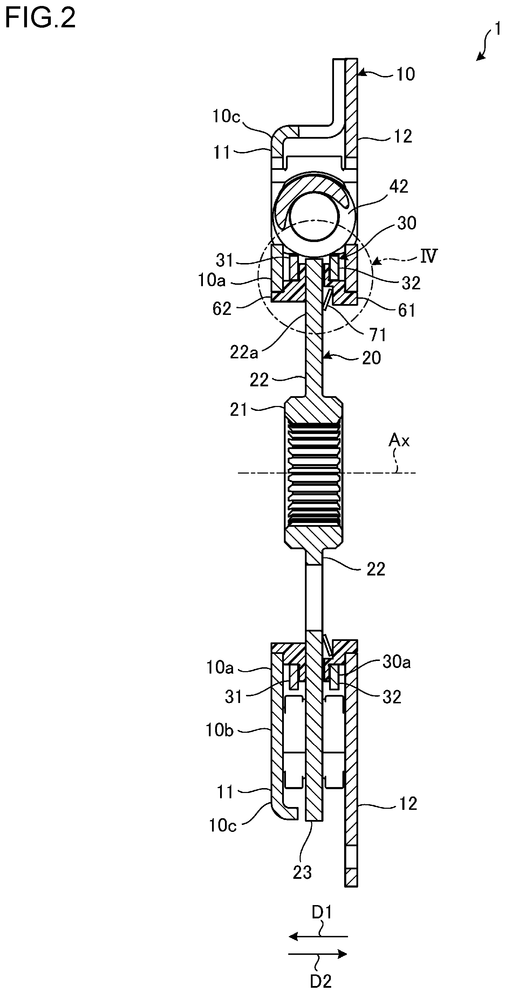

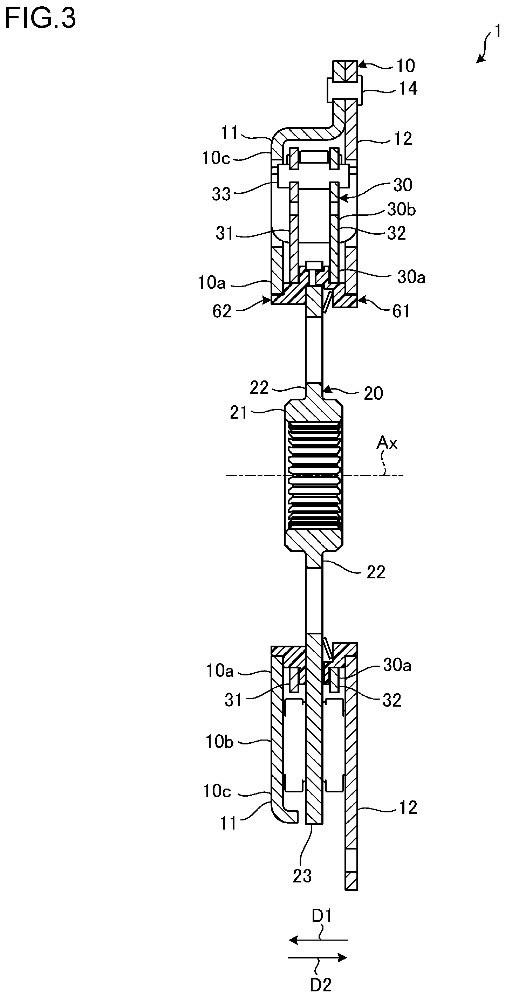

FIG. 1 is an exemplary front view of a damper 1 according to the embodiment as viewed in the axial direction. FIG. 2 is a cross-sectional view taken along line II-II of FIG. 1. FIG. 3 is a cross-sectional view taken along line III-III of FIG. 1.

As shown in FIGS. 1 to 3, the damper 1 includes a drive plate 10, a driven plate 20, and an intermediate plate 30. The drive plate 10, the driven plate 20, and the intermediate plate 30 are provided to be each independently rotatable around the rotation center Ax. That is, the drive plate 10, the driven plate 20, and the intermediate plate 30 are rotatable relative to each other. Moreover, each of the drive plate 10, the driven plate 20, and the intermediate plate 30 is made of, for example, a metal material such as an iron-based material. The drive plate 10 is an example of a first rotary element, the driven plate 20 is an example of a second rotary element, and the intermediate plate 30 is an example of a third rotary element. Note that the drive plate 10 can also be referred to as an outer plate or an input member, and the driven plate 20 can also be referred to as an inner plate or an output member.

As shown in FIG. 1, the drive plate 10 includes a central portion 10a, a plurality of drive arms 10b, and a peripheral edge portion 10c. The central portion 10a is located on an inner inside in the radial direction of the drive plate 10, and the central portion 10a has an annular shape centered on the rotation center Ax. The drive arms 10b protrude outward in the radial direction from the central portion 10a, and extend between the central portion 10a and the peripheral edge portion 10c. In the present embodiment, the plurality of drive arms 10b are provided at intervals in the circumferential direction.

Further, the drive plate 10 includes a plurality of members. Specifically, as shown in FIGS. 2 and 3, the drive plate 10 includes a front plate 11 and a rear plate 12. The front plate 11 and the rear plate 12 are integrally coupled by a connection member 14 (FIG. 3). The connection member 14 is, for example, a rivet. However, the connection member 14 may be another fastening member such as a bolt or a nut, or may be a shaft or the like. Note that the front plate 11 and the rear plate 12 may be coupled by welding, bonding, or the like, instead of using the connection member 14.

The front plate 11 is located between the engine and the rear plate 12. That is, the rear plate 12 is located on the side opposite to the side of the engine with respect to the front plate 11. The front plate 11 and the rear plate 12 have respective plate shapes intersecting (orthogonal to) the rotation center Ax (axial direction).

The driven plate 20 includes a hub 21, a flange 22, and a plurality of driven arms 23. The flange 22 is an example of a wall portion.

The hub 21 has a cylindrical shape centered on the rotation center Ax. The hub 21 is located on an inner side in the radial direction of the driven plate 20.

The flange 22 protrudes outward in the radial direction from the hub 21. The flange 22 is located between the front plate 11 and the rear plate 12 of the drive plate 10. The flange 22 has a plate shape intersecting (orthogonal to) the rotation center Ax (axial direction).

The plurality of driven arms 23 protrude outward in the radial direction from the flange 22. The plurality of driven arms 23 are provided at intervals in the circumferential direction. The drive arm 10b and the driven arm 23 overlap with each other in the axial direction.

The intermediate plate 30 includes a central portion 30a and a plurality of intermediate arms 30b. The central portion 30a is located on an inner side in the radial direction of the intermediate plate 30, and the central portion 30a has an annular shape centered on the rotation center Ax. The intermediate arms 30b protrude outward in the radial direction from the central portion 30a. In the present embodiment, the plurality of intermediate arms 30b are provided at intervals in the circumferential direction.

Further, the intermediate plate 30 includes a plurality of members. Specifically, the intermediate plate 30 includes a first intermediate plate 31 and a second intermediate plate 32. The first intermediate plate 31 and the second intermediate plate 32 are integrally coupled by a connection member 33 (FIG. 3). The connection member 33 is, for example, a rivet. However, the connection member 33 may be another fastening member such as a bolt or a nut, or may be a shaft or the like.

The first intermediate plate 31 is located between the front plate 11 of the drive plate 10 and the hub 21 of the driven plate 20. Moreover, the second intermediate plate 32 is located between the rear plate 12 of the drive plate 10 and the hub 21 of the driven plate 20. The first intermediate plate 31 and the second intermediate plate 32 have respective plate shapes intersecting (orthogonal to) the rotation center Ax.

Further, a first friction element 61 having a cylindrical shape and a second friction element 62 having a cylindrical shape are provided on both sides in the axial direction of the flange 22 of the driven plate 20. Both the first friction element 61 and the second friction element 62 provide, when the drive plate 10 and the driven plate 20 rotate relative to each other, sliding resistance therebetween. In the present embodiment, the first friction element 61 is provided to be rotatable integrally with the driven plate 20, and is provided to be slidable on the rear plate 12. The first friction element 61 is coupled to the driven plate 20 by, for example, fitting together a recessed portion provided in one of the first friction element 61 and the flange 22 of the driven plate 20 and a protruding portion provided in the other of the first friction element 61 and the flange 22 of the driven plate 20. Moreover, the second friction element 62 is provided to be rotatable integrally with the driven plate 20, and is provided to be slidable on the front plate 11. The second friction element 62 is coupled to the driven plate 20 by, for example, fitting together a recessed portion provided in one of the second friction element 62 and the flange 22 of the driven plate 20 and a protruding portion provided in the other of the second friction element 62 and the flange 22 of the driven plate 20.

Each of the first friction element 61 and the second friction element 62 is made of, for example, a synthetic resin material.

Moreover, a disc spring 71 is interposed between the first friction element 61 and the driven plate 20.

As shown in FIG. 1, the damper 1 includes a plurality of first coil springs 41 and a plurality of second coil springs 42. Each of the first coil spring 41 and the second coil spring 42 is interposed between a corresponding one of the drive arm 10b and the driven arm 23 and the intermediate arm 30b.

The first coil spring 41 and the second coil spring 42 extend substantially along the circumferential direction (tangential direction). The first coil spring 41 is located adjacent to the drive arm 10b and the driven arm 23 in the clockwise direction in FIG. 1, and is located adjacent to the intermediate arm 30b in the counterclockwise direction in FIG. 1. Moreover, the second coil spring 42 is located adjacent to the drive arm 10b and the driven arm 23 in the counterclockwise direction in FIG. 1, and is located adjacent to the intermediate arm 30b in the clockwise direction in FIG. 1. The first coil springs 41 and the second coil springs 42 are alternately arranged in the circumferential direction. The first coil spring 41 is an example of a first elastic element, and the second coil spring 42 is an example of a second elastic element. Each of the first elastic element and the second elastic element is not limited to the coil spring, and may be another elastic element such as an elastomer.

In a case where the forward rotational direction of the damper 1 is the clockwise direction, at the time of acceleration, the drive arm 10b and the intermediate arm 30b elastically compress the first coil spring 41, and the intermediate arm 30b and the driven arm 23 elastically compress the second coil spring 42, due to relative torsion of the drive plate 10 and the driven plate 20. On the other hand, at the time of deceleration, the drive arm 10b and the intermediate arm 30b elastically compress the second coil spring 42, and the intermediate arm 30b and the driven arm 23 elastically compress the first coil spring 41, due to relative torsion of the drive plate 10 and the driven plate 20. The torsional state at the time of acceleration is a state in which the drive plate 10 is subjected to relative torsion in the forward rotational direction, from a neutral position (non-torsional position, position where the torsional angle is zero) with respect to the driven plate 20, and herein, this state is set as a forward torsional state of the damper 1. On the other hand, the torsional state at the time of deceleration is a state in which the drive plate 10 is subjected to relative torsion in a reverse rotational direction (direction reverse to the forward rotational direction), from the neutral position with respect to the driven plate 20, and herein, this state is set as a reverse torsional state of the damper 1.

Further, a seat member 43 is interposed between each of both ends in a longitudinal direction (winding axis direction, circumferential direction of the damper 1) of the first coil springs 41 and the second coil springs 42 and a corresponding one of the drive arms 10b, the driven arms 23, and the intermediate arms 30b. The seat member 43 can also be referred to as a retainer.

Next, a positioning structure for the drive plate 10, the driven plate 20, and the intermediate plate 30 will be described.

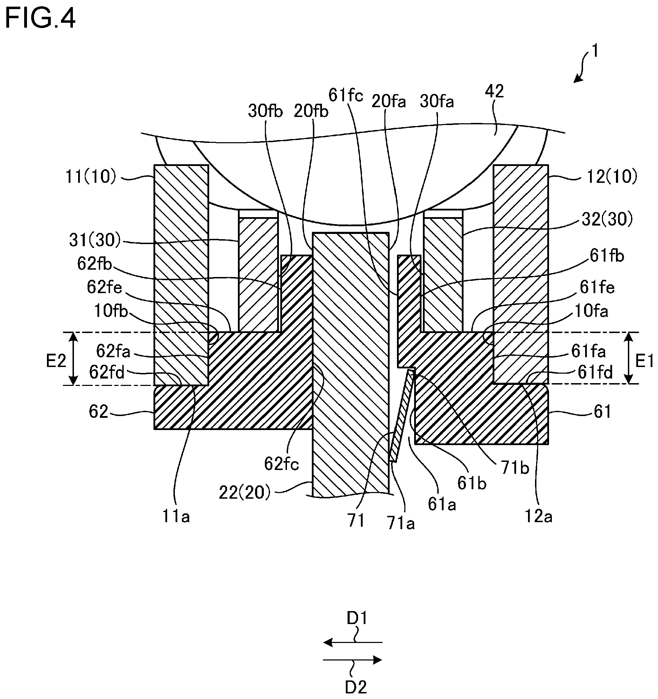

FIG. 4 is an enlarged view of part IV of FIG. 2. As shown in FIG. 4, the drive plate 10 includes a friction face 10fa and a friction face 10fb. The friction face 10fa is an example of a first face, and the friction face 10fb is an example of a second face. The friction face 10fa is provided on the rear plate 12, and faces in one direction D1 in the axial direction of the rotation center Ax. The friction face 10fa is formed in an annular shape around the rotation center Ax. The friction face 10fb is provided on the front plate 11, and is located on the one direction D1 side with respect to the friction face 10fa. The friction face 10fb faces in an other direction D2 that is opposite to the one direction D1 in the axial direction. The friction face 10fb is formed in an annular shape around the rotation center Ax. The friction face 10fa and the friction face 10fb face each other in the axial direction. That is, the friction face 10fa and the friction face 10fb are arranged in the axial direction. The flange 22 of the driven plate 20 is located between the friction face 10fa and the friction face 10fb.

Further, the driven plate 20 includes faces 20fa, 20fb. The faces 20fa, 20fb are provided on the flange 22. The face 20fa faces in the other direction D2, and the face 20fb faces in the one direction D1.

The intermediate plate 30 includes a contact face 30fa and a contact face 30fb. The contact face 30fa is an example of a third face, and the contact face 30fb is a fourth example. The contact face 30fa is located between the flange 22 and the friction face 10fa in the axial direction, and faces in the one direction D1. The contact face 30fb is located between the flange 22 and the friction face 10fb in the axial direction, and faces in the other direction D2.

The first friction element 61 includes a friction face 61fa and a contact face 61fb. The friction face 61fa is an example of a fifth face, and the contact face 61fb is an example of a sixth face. The friction face 61fa is located on the one direction D1 side with respect to the friction face 10fa of the drive plate 10, and faces in the other direction D2. The friction face 61fa is in contact with the friction face 10fa. The friction face 61fa is slidable on the friction face 10fa. The contact face 61fb is located on the one direction D1 side with respect to the contact face 30fa of the intermediate plate 30, and faces in the other direction D2. The contact face 61fb can come into contact with the contact face 30fa. The contact face 61fb is slidable on the contact face 30fa.

Further, the first friction element 61 includes faces 61fc, 61fd, 61fe. The face 61fc faces in the one direction D1, and faces the face 20fa of the flange 22 of the intermediate plate 30 with a space therebetween. The face 61fd faces outward in the radial direction, and is in contact with an inner peripheral portion 12a of the rear plate 12 of the drive plate 10. The inner peripheral portion 12a is, for example, a cylindrical face. Accordingly, the first friction element 61 is positioned in the radial direction by the inner peripheral portion 12a of the rear plate 12 of the drive plate 10. The face 61fd is an example of a ninth face, and the inner peripheral portion 12a is an example of a first inner peripheral portion. The face 61fe faces outward in the radial direction, supports an inner peripheral portion of the second intermediate plate 32 of the intermediate plate 30, and positions the second intermediate plate 32, that is, the intermediate plate 30 in the radial direction.

Further, a recessed portion 61a is provided on the face 61fc. The recessed portion 61a is recessed from the face 61fc in a direction away from the flange 22, that is, in the other direction D2. The face 61c is an example of a face of the first friction element 61 on the flange 22 side.

The second friction element 62 includes a friction face 62fa and a contact face 62fb. The friction face 62fa is an example of a seventh face, and the contact face 62fb is an example of an eighth face. The friction face 62fa is located on the other direction D2 side with respect to the friction face 10fb of the drive plate 10, and faces in the one direction D1. The friction face 62fa is in contact with the friction face 10fb. The friction face 62fa is slidable on the friction face 10fb. The contact face 62fb is located on the other direction D2 side with respect to the contact face 30fb of the intermediate plate 30, and faces in the one direction D1. The contact face 62fb can come into contact with the contact face 30fb. The contact face 62fb is slidable on the contact face 30fb.

Further, the second friction element 62 includes faces 62fc, 62fd, 62fe. The face 62fc faces in the other direction D2, and faces the face 20fb of the flange 22 of the intermediate plate 30. The face 62ffc is in contact with the face 20fb. The face 62fd faces outward in the radial direction, and is in contact with an inner peripheral portion 11a of the front plate 11 of the drive plate 10. The inner peripheral portion 11a is, for example, a cylindrical face. Accordingly, the second friction element 62 is positioned in the radial direction by the inner peripheral portion 11a of the front plate 11 of the drive plate 10. The inner peripheral portion 11a is an example of a second inner peripheral portion. The face 62fe faces outward in the radial direction, supports an inner peripheral portion of the first intermediate plate 31 of the intermediate plate 30, and positions the first intermediate plate 31, that is, the intermediate plate 30 in the radial direction.

The disc spring 71 is interposed between the first friction element 61 and the flange 22. The disc spring 71 has an annular shape around the rotation center Ax. The disc spring 71 has a conical shape whose diameter gradually increases in the other direction D2. The disc spring 71 includes a first end portion 71a and a second end portion 71b. The first end portion 71a is an end portion (edge portion) on an inner peripheral side, and is in contact with the face 20fa of the flange 22 of the driven plate 20. The second end portion 71b is an end portion (edge portion) on an outer peripheral side, and is received in the recessed portion 61a of the first friction element 61. That is, at least a portion of the disc spring 71 is received in the recessed portion 61a. The recessed portion 61a is also referred to as a receiving portion. The second end portion 71b is in contact with a face 61b forming the recessed portion 61a in the first friction element 61. The second end portion 71b is aligned in the axial direction with the friction face 10fa, the friction face 10fb, the friction face 61fa, and the friction face 62fa. That is, the second end portion 71b axially overlaps with the friction face 10fa with the first friction element 61 interposed therebetween, and axially overlaps with the friction face 10fb with the second friction element 62 interposed therebetween. A radial position of the second end portion 71b is within a range E1 of a radial position of an overlapping portion between the friction face 10fa and the friction face 61fa, and is within a range E2 of a radial position of an overlapping portion between the friction face 10fb and the friction face 62fa. The disc spring 71 is an example of a third elastic element. The disc spring 71 can be made of an iron-based metal material such as spring steel.

The disc spring 71 causes the friction face 10fa and the friction face 61fa to be pressed against each other, and causes the friction face 10fb and the friction face 62fa to be pressed against each other. As a result, a frictional force is generated between the friction face 10fa and the friction face 61fa, and a frictional force is generated between the friction face 10fb and the friction face 62fa.

In the above configuration, the disc spring 71 causes the friction face 10fa of the drive plate 10 and the friction face 61fa of the first friction element 61 to be pressed against each other, and causes the friction face 10fb of the drive plate 10 and the friction face 62fa of the second friction element 62 to be pressed against each other, whereby the friction face 10fa and the friction face 61fa come into contact with each other, and the friction face 10fb and the friction face 62fa come into contact with each other. Accordingly, relative positioning of the drive plate 10 and the driven plate 20 in the axial direction is performed. Here, the intermediate plate 30, and each of the first friction element 61 and the second friction element 62 are movable relative to each other in the axial direction. As a result, the damper 1 can be changed between a state in which a gap exists between the contact face 30fa and the contact face 61fb (FIG. 4), that is, a state in which the contact face 30fa and the contact face 61fb are separated from each other (FIG. 4), and a state in which the contact face 30fa and the contact face 61fb are in contact with each other. Moreover, the damper 1 can be changed between a state in which a gap exists between the contact face 30fb and the contact face 62fb (FIG. 4), that is, a state in which the contact face 30fb and the contact face 62fb are separated from each other, and a state in which the contact face 60fb and the contact face 62fb are in contact with each other. Then, by allowing the contact face 30fa of the intermediate plate 30 and the contact face 61fb of the first friction element 61 to come into contact with each other in the axial direction, or by allowing the contact face 30fb of the intermediate plate 30 and the contact face 62fb of the second friction element 62 to come into contact with each other in the axial direction, relative positioning of the driven plate 20 and the intermediate plate 30 in the axial direction is performed.

At this time, when the first friction element 61 and the second friction element 62 slide on the drive plate 10 and wear, at least a portion of the first friction element 61 and the second friction element 62 becomes thinner in the axial direction. At this time, the disc spring 71 is interposed between the first friction element 61 and the flange 22 of the intermediate plate 30, and thus at least a portion of the first friction element 61 and the second friction element 62 becomes thinner in the axial direction such that the first friction element 61 and the second friction element 62 are separated from each other in the axial direction. Specifically, in the first friction element 61, a portion between the friction face 61fa and the face 61fc becomes thinner in the axial direction, and in the second friction element 62, a portion between the friction face 62fa and the face 62fc becomes thinner in the axial direction. This reduces a decrease in a distance between the contact face 61fb of the first friction element 61 and the contact face 62fb of the second friction element 62. That is, the first friction element 61 and the second friction element 62 wear such that rattling between the second intermediate plate 32 of the intermediate plate 30 and the first friction element 61 and rattling between the first intermediate plate 31 of the intermediate plate 30 and the second friction element 62 are reduced.

As described above, in the present embodiment, the damper 1 includes the drive plate 10 (first rotary element), the driven plate 20 (second rotary element), the intermediate plate 30 (third rotary element), the first coil spring 41 (first elastic element), the second coil spring 42 (second elastic element), the first friction element 61, the second friction element 62, and the disc spring 71 (third elastic element). The drive plate 10 is provided to be rotatable around the rotation center Ax. The drive plate 10 includes the friction face 10fa (first face) facing in the one direction D1 in the axial direction of the rotation center Ax, and the friction face 10fb (second face) located on the one direction D1 side with respect to the friction face 10fa and facing in the other direction D2 opposite to the one direction D1. The driven plate 20 is provided to be rotatable around the rotation center Ax. The driven plate 20 includes the flange 22 (wall portion) located between the friction face 10fa and the friction face 10fb in the axial direction. The intermediate plate 30 is provided to be rotatable around the rotation center Ax. The intermediate plate 30 includes the contact face 30fa (third face) located between the flange 22 and the friction face 10fa in the axial direction, and the contact face 30fb (fourth face) located between the flange 22 and the friction face 10fb in the axial direction. The first coil spring 41 is interposed between the drive plate 10 and the intermediate plate 30, and is configured to elastically expand and contract in the circumferential direction around the rotation center Ax. The second coil spring 42 is interposed between the driven plate 20 and the intermediate plate 30, and is configured to elastically expand and contract in the circumferential direction around the rotation center Ax. The first friction element 61 is provided to be rotatable around the rotation center Ax integrally with the driven plate 20. The first friction element 61 includes the friction face 61fa (fifth face) located on the one direction D1 side with respect to the friction face 10fa and slidable on the friction face 10fa, and the contact face 61fb (sixth face) located on the one direction D1 side with respect to the contact face 30fa and slidable on the contact face 30fa. The second friction element 62 is provided to be rotatable around the rotation center Ax integrally with the driven plate 20. The second friction element 62 includes the friction face 62fa (seventh face) located on the other direction D2 side with respect to the friction face 10fb and slidable on the friction face 10fb, and the contact face 62fb (eighth face) located on the other direction D2 side with respect to the contact face 30fb and slidable on the contact face 30fb. The disc spring 71 is interposed between one of the first friction element 61 and the second friction element 62 (as an example, the first friction element 61) and the flange 22, and causes the friction face 10fa and the friction face 61fa to be pressed against each other and causes the friction face 10fb and the friction face 62fa to be pressed against each other.

According to such a configuration, the disc spring 71 causes the friction face 10fa of the drive plate 10 and the friction face 61fa of the first friction element 61 to be pressed against each other, and causes the friction face 10fb of the drive plate 10 and the friction face 62fa of the second friction element 62 to be pressed against each other, whereby the friction face 10fa and the friction face 61fa come into contact with each other, and the friction face 10fb and the friction face 62fa come into contact with each other. Accordingly, relative positioning of the drive plate 10 and the driven plate 20 in the axial direction is performed. Moreover, by allowing the contact face 30fa of the intermediate plate 30 and the contact face 61fb of the first friction element 61 to come into contact with each other in the axial direction, or by allowing the contact face 30fb of the intermediate plate 30 and the contact face 62fb of the second friction element 62 to come into contact with each other in the axial direction, relative positioning of the driven plate 20 and the intermediate plate 30 in the axial direction is performed. That is, in the above configuration, the first friction element 61, the second friction element 62, and the disc spring 71 are used for both positioning of the drive plate 10 and the driven plate 20 in the axial direction and positioning of the driven plate 20 and the intermediate plate 30 in the axial direction. Thus, according to the above configuration, it is possible to reduce the number of components included in the configuration for positioning the drive plate 10, the driven plate 20, and the intermediate plate 30 in the axial direction, as compared with a configuration in which the first friction element 61, the second friction element 62, and the disc spring 71 are not used for both positioning of the drive plate 10 and the driven plate 20 in the axial direction and positioning of the driven plate 20 and the intermediate plate 30 in the axial direction. Therefore, it is possible to simplify the configuration for positioning the drive plate 10, the driven plate 20, and the intermediate plate 30 in the axial direction.

Further, in the above configuration, when the first friction element 61 and the second friction element 62 slide on the drive plate 10 and wear, at least a portion of the first friction element 61 and the second friction element 62 becomes thinner in the axial direction. At this time, the disc spring 71 is interposed between the first friction element 61 and the flange 22 of the intermediate plate 30, and thus at least a portion of the first friction element 61 and the second friction element 62 becomes thinner in the axial direction such that the first friction element 61 and the second friction element 62 are separated from each other in the axial direction. Specifically, in the first friction element 61, a portion between the friction face 61fa and the face 61fc becomes thinner in the axial direction, and in the second friction element 62, a portion between the friction face 62fa and the face 62fc becomes thinner in the axial direction. This reduces a decrease in the distance between the contact face 61fb of the first friction element 61 and the contact face 62fb of the second friction element 62. That is, the first friction element 61 and the second friction element 62 wear such that rattling between the second intermediate plate 32 of the intermediate plate 30 and the first friction element 61 and rattling between the first intermediate plate 31 of the intermediate plate 30 and the second friction element 62 are reduced. Thus, even when the first friction element 61 and the second friction element 62 are worn, it is possible to reduce generation of rattling between the driven plate 20 and the intermediate plate 30. Therefore, the operation of the damper 1 is stabilized.

Further, the disc spring 71 includes the first end portion 71a in contact with the flange 22 and the second end portion 71b in contact with one of the first friction element 61 and the second friction element 62. The second end portion 71b is aligned in the axial direction with the friction face 10fa, the friction face 10fb, the friction face 61fa, and the friction face 62fa.

According to such a configuration, the second end portion 71b of the disc spring 71 is aligned in the axial direction with the friction face 10fa, the friction face 10fb, the friction face 61fa, and the friction face 62fa. Thus, equalization is easily achieved between a surface pressure between the friction face 10fa and the friction face 61fa and a surface pressure between the friction face 10fb and the friction face 62fa. Therefore, it is possible to stabilize frictional torque between the drive plate 10 and the driven plate 20 (specifically, frictional torque between each of the first friction element 61 and the second friction element 62 and the driven plate 20).

Further, the drive plate 10 positions the first friction element 61 in the axial direction, and positions the second friction element 62 in the axial direction.

According to such a configuration, relative positional accuracy in the radial direction between the first friction element 61 and the second friction element 62 is improved, as compared with a configuration in a case where the first friction element 61 and the second friction element 62 are positioned in the radial direction by respective different members.

Further, one of the first friction element 61 and the second friction element 62 (as an example, the first friction element 61) is provided with the recessed portion 61a that is recessed in a direction away from the flange 22 from the face 61fc on the flange 22 side of the one of the first friction element 61 and the second friction element 62, and that receives the disc spring 71.

According to such a configuration, the thickness of the damper 1 in the axial direction can be reduced as compared with a configuration in which the recessed portion 61a is not provided.

Further, the damper 1 can be changed between a state in which a gap exists between the contact face 30fa and the contact face 61fb and a state in which the contact face 30fa and the contact face 61fb are in contact with each other, and can be changed between a state in which a gap exists between the contact face 30fb and the contact face 62fb and a state in which the contact face 60fb and the contact face 62fb are in contact with each other.

According to such a configuration, by allowing the contact face 30fa of the intermediate plate 30 and the contact face 61fb of the first friction element 61 to come into contact with each other in the axial direction, or by allowing the contact face 30fb of the intermediate plate 30 and the contact face 62fb of the second friction element 62 to come into contact with each other in the axial direction, relative positioning of the driven plate 20 and the intermediate plate 30 in the axial direction can be performed.

Further, the first friction element 61 includes the face 61fd (ninth face) facing outward in the radial direction. The second friction element 62 includes the face 62fd (tenth face) facing outward in the radial direction. The drive plate 10 includes the inner peripheral portion 12a (first inner peripheral portion) that is in contact with the face 61fd and that positions the first friction element 61 in the radial direction, and the inner peripheral portion 11a (second inner peripheral portion) that is in contact with the face 62fd and that positions the second friction element 62 in the radial direction.

According to such a configuration, the first friction element 61 and the second friction element 62 can be respectively positioned in the radial direction by the inner peripheral portion 12a and the inner peripheral portion 11a of the drive plate 10.

Note that in the above embodiment, an example has been described in which the disc spring 71 is interposed between the first friction element 61 and the flange 22, but the configuration is not limited thereto. For example, the disc spring 71 may be interposed between the second friction element 62 and the flange 22.

Further, in the above embodiment, an example has been described in which the recessed portion 61a is provided, but the configuration is not limited thereto. For example, a configuration may be adopted in which the recessed portion 61a is not provided.

An embodiment of the present invention has been described above as an example. However, the above embodiment is merely an example, and is not intended to limit the scope of the invention. The embodiment can be implemented in various other forms, and various omission, substitutions, combinations, and changes can be made, and the scope of protection is defined by the appended claims. Moreover, the configurations or the shapes in the examples can be partially replaced and implemented. Further, the specifications (structure, type, direction, shape, size, length, width, height, number, arrangement, position, and the like) of each configuration, shape, or the like can be appropriately changed and implemented.

### REFERENCE SIGNS LIST

1: Damper, 10: Drive plate (first rotary element), 10fa: Friction face (first face), 10fb: Friction face (second face), 11a: Inner peripheral portion (second inner peripheral portion), 12a: Inner peripheral portion (first inner peripheral portion), 20: Driven plate (second rotary element), 22: Flange (wall portion), 30: Intermediate plate (third rotary element), 30fa: Contact face (third face), 30fb: Contact face (fourth face), 41: First coil spring (first elastic element), 42: Second coil spring (second elastic element), 61: First friction element, 61a: Recessed portion, 61fa: Friction face (fifth face), 61fb: Contact face (sixth face), 61fd: Face (ninth face), 62: Second friction element, 62fa: Friction face (seventh face), 62fb: Contact face (eighth face), 62fd: Face (tenth face), 71: Disc spring (third elastic element), 71a: First end portion, 71b: Second end portion, Ax: Rotation center, D1: One direction, and, D2: Other direction

## Claims

1. A damper comprising:
a first rotary element (10) provided to be rotatable around a rotation center, the first rotary element including a first face and a second face, the first face facing in one direction in an axial direction of the rotation center, the second face being located on the one direction side with respect to the first face and facing in an other direction opposite to the one direction;
a second rotary element (20) provided to be rotatable around the rotation center, the second rotary element including a wall portion located between the first face and the second face in the axial direction;
a third rotary element (30) provided to be rotatable around the rotation center, the third rotary element including a third face and a fourth face, the third face being located between the wall portion and the first face in the axial direction, the fourth face being located between the wall portion and the second face in the axial direction;
a first elastic element (41) interposed between the first rotary element and the third rotary element, the first elastic element being configured to elastically expand and contract in a circumferential direction around the rotation center;
a second elastic element (42) interposed between the second rotary element and the third rotary element, the second elastic element being configured to elastically expand and contract in a circumferential direction around the rotation center;
a first friction element (61) provided to be rotatable around the rotation center integrally with the second rotary element, the first friction element including a fifth face and a sixth face, the fifth face being located on the one direction side with respect to the first face and being slidable on the first face, the sixth face being located on the one direction side with respect to the third face and being slidable on the third face;
a second friction element (62) provided to be rotatable around the rotation center integrally with the second rotary element, the second friction element including a seventh face and an eighth face, the seventh face being located on the other direction side with respect to the second face and being slidable on the second face, the eighth face being located on the other direction side with respect to the fourth face and being slidable on the fourth face; and **characterised in that** the damper comprises
a third elastic element (71) interposed between one of the first friction element and the second friction element and the wall portion, the third elastic element causing the first face and the fifth face to be pressed against each other and causing the second face and the seventh face to be pressed against each other.

2. The damper according to claim 1, wherein
the third elastic element includes a first end portion in contact with the wall portion and a second end portion in contact with the one of the first friction element and the second friction element, and
the second end portion is aligned in the axial direction with the first face, the second face, the fifth face, and the seventh face.

3. The damper according to claim 1, wherein the first rotary element positions the rotation center in the first friction element, in a radial direction, and positions the second friction element in the radial direction.

4. The damper according to any one of claims 1 to 3, wherein the one of the first friction element and the second friction element is provided with a recessed portion that is recessed in a direction away from the wall portion from a face on the wall portion side of the one of the first friction element and the second friction element, and that receives the third elastic element.

5. The damper according to claim 1, wherein the damper is allowed to be changed between a state in which a gap exists between the third face and the sixth face and a state in which the third face and the sixth face are in contact with each other, and is allowed to be changed between a state in which a gap exists between the fourth face and the eighth face and a state in which the fourth face and the eighth face are in contact with each other.

6. The damper according to claim 3, wherein
the first friction element includes a ninth face facing outward in the radial direction,
the second friction element includes a tenth face facing outward in the radial direction, and
the first rotary element includes a first inner peripheral portion and a second inner peripheral portion, the first inner peripheral portion being in contact with the ninth face and positioning the first friction element in the radial direction, the second inner peripheral portion being in contact with the tenth face and positioning the second friction element in the radial direction.

## Patentansprüche

1. Dämpfer, mit:
einem ersten Drehelement (10), das vorgesehen ist, um um ein Drehzentrum drehbar zu sein, wobei das erste Drehelement eine erste Fläche und eine zweite Fläche aufweist, wobei die erste Fläche in eine Richtung in einer axialen Richtung des Drehzentrums weist, wobei die zweite Fläche auf der einen Richtungsseite in Bezug auf die erste Fläche angeordnet ist und in eine andere Richtung entgegengesetzt zu der einen Richtung weist;
einem zweiten Drehelement (20), das vorgesehen ist, um um das Drehzentrum drehbar zu sein, wobei das zweite Drehelement einen Wandabschnitt aufweist, der zwischen der ersten Fläche und der zweiten Fläche in der axialen Richtung angeordnet ist;
einem dritten Drehelement (30), das vorgesehen ist, um um das Drehzentrum drehbar zu sein, wobei das dritte Drehelement eine dritte Fläche und eine vierte Fläche aufweist, wobei die dritte Fläche zwischen dem Wandabschnitt und der ersten Fläche in der axialen Richtung angeordnet ist, wobei die vierte Fläche zwischen dem Wandabschnitt und der zweiten Fläche in der axialen Richtung angeordnet ist;
einem ersten elastischen Element (41), das zwischen dem ersten Drehelement und dem dritten Drehelement angeordnet ist, wobei das erste elastische Element konfiguriert ist, um sich in einer Umfangsrichtung um das Drehzentrum elastisch auszudehnen und zusammenzuziehen;
einem zweiten elastischen Element (42), das zwischen dem zweiten Drehelement und dem dritten Drehelement angeordnet ist, wobei das zweite elastische Element konfiguriert ist, um sich in einer Umfangsrichtung um das Drehzentrum elastisch auszudehnen und zusammenzuziehen;
einem ersten Reibungselement (61), das vorgesehen ist, um um das Drehzentrum integral mit dem zweiten Drehelement drehbar zu sein, wobei das erste Reibungselement eine fünfte Fläche und eine sechste Fläche aufweist, wobei die fünfte Fläche auf der einen Richtungsseite in Bezug auf die erste Fläche angeordnet ist und auf der ersten Fläche verschiebbar ist, wobei die sechste Fläche auf der einen Richtungsseite in Bezug auf die dritte Fläche angeordnet ist und auf der dritten Fläche verschiebbar ist;
einem zweiten Reibungselement (62), das vorgesehen ist, um um das Drehzentrum integral mit dem zweiten Drehelement drehbar zu sein, wobei das zweite Reibungselement eine siebte Fläche und eine achte Fläche aufweist, wobei die siebte Fläche auf der anderen Richtungsseite in Bezug auf die zweite Fläche angeordnet ist und auf der zweiten Fläche verschiebbar ist, wobei die achte Fläche auf der anderen Richtungsseite in Bezug auf die vierte Fläche angeordnet ist und auf der vierten Fläche verschiebbar ist; und **dadurch gekennzeichnet, dass** der Dämpfer Folgendes aufweist:
ein drittes elastisches Element (71), das zwischen einem von dem ersten Reibungselement und dem zweiten Reibungselement und dem Wandabschnitt angeordnet ist, wobei das dritte elastische Element bewirkt, dass die erste Fläche und die fünfte Fläche gegeneinander gedrückt werden, und bewirkt, dass die zweite Fläche und die siebte Fläche gegeneinander gedrückt werden.

2. Dämpfer nach Anspruch 1, wobei
das dritte elastische Element einen ersten Endabschnitt in Kontakt mit dem Wandabschnitt und einen zweiten Endabschnitt in Kontakt mit dem einen von dem ersten Reibungselement und dem zweiten Reibungselement aufweist, und
der zweite Endabschnitt in der axialen Richtung mit der ersten Fläche, der zweiten Fläche, der fünften Fläche und der siebten Fläche ausgerichtet ist.

3. Dämpfer nach Anspruch 1, wobei das erste Drehelement das Drehzentrum in dem ersten Reibungselement in einer radialen Richtung positioniert und das zweite Reibungselement in der radialen Richtung positioniert.

4. Dämpfer nach einem der Ansprüche 1 bis 3, wobei das eine von dem ersten Reibungselement und dem zweiten Reibungselement mit einem vertieften Abschnitt versehen ist, der in einer Richtung weg von dem Wandabschnitt von einer Fläche auf der Wandabschnittsseite des einen von dem ersten Reibungselement und dem zweiten Reibungselement vertieft ist, und der das dritte elastische Element aufnimmt.

5. Dämpfer nach Anspruch 1, wobei der Dämpfer zwischen einem Zustand, in dem ein Spalt zwischen der dritten Fläche und der sechsten Fläche besteht, und einem Zustand, in dem die dritte Fläche und die sechste Fläche miteinander in Kontakt sind, gewechselt werden kann, und zwischen einem Zustand, in dem ein Spalt zwischen der vierten Fläche und der achten Fläche besteht, und einem Zustand, in dem die vierte Fläche und die achte Fläche miteinander in Kontakt sind, gewechselt werden kann.

6. Dämpfer nach Anspruch 3, wobei
das erste Reibungselement eine neunte Fläche aufweist, die in der radialen Richtung nach außen weist,
das zweite Reibungselement eine zehnte Fläche aufweist, die in der radialen Richtung nach außen weist, und
das erste Drehelement einen ersten inneren Umfangsabschnitt und einen zweiten inneren Umfangsabschnitt aufweist, wobei der erste innere Umfangsabschnitt mit der neunten Fläche in Kontakt ist und das erste Reibungselement in der radialen Richtung positioniert, wobei der zweite innere Umfangsabschnitt mit der zehnten Fläche in Kontakt ist und das zweite Reibungselement in der radialen Richtung positioniert.

## Revendications

1. Amortisseur comprenant :
un premier élément rotatif (10) conçu pour tourner autour d'un centre de rotation, le premier élément rotatif incluant une première face et une deuxième face, la première face étant orientée dans une direction, dans une direction axiale du centre de rotation, la deuxième face étant située du côté d'une direction par rapport à la première face et orientée dans une autre direction opposée à la première direction ;
un deuxième élément rotatif (20) prévu pour tourner autour du centre de rotation, le deuxième élément rotatif incluant une partie de paroi située entre la première face et la deuxième face dans la direction axiale ;
un troisième élément rotatif (30) prévu pour tourner autour du centre de rotation, le troisième élément rotatif incluant une troisième face et une quatrième face, la troisième face étant située entre la partie de paroi et la première face dans la direction axiale, la quatrième face étant située entre la partie de paroi et la deuxième face dans la direction axiale ;
un premier élément élastique (41) interposé entre le premier élément rotatif et le troisième élément rotatif, le premier élément élastique étant configuré pour s'étendre et se contracter élastiquement dans une direction circonférentielle autour du centre de rotation ;
un deuxième élément élastique (42) interposé entre le deuxième élément rotatif et le troisième élément rotatif, le deuxième élément élastique étant configuré pour s'étendre et se contracter élastiquement dans une direction circonférentielle autour du centre de rotation ;
un premier élément de frottement (61) prévu pour tourner autour du centre de rotation d'un seul tenant avec le deuxième élément rotatif, le premier élément de frottement incluant une cinquième face et une sixième face, la cinquième face étant située du côté d'une direction par rapport à la première face et pouvant glisser sur la première face, la sixième face étant située du côté d'une direction par rapport à la troisième face et pouvant glisser sur la troisième face ;
un second élément de frottement (62) prévu pour tourner autour du centre de rotation d'un seul tenant avec le deuxième élément rotatif, le second élément de frottement incluant une septième face et une huitième face, la septième face étant située du côté opposé à la deuxième face et pouvant coulisser sur la deuxième face, la huitième face étant située sur l'autre côté de direction par rapport à la quatrième face et pouvant coulisser sur la quatrième face ; et **caractérisé en ce que** l'amortisseur comprend
un troisième élément élastique (71) interposé entre l'un du premier élément de frottement et du second élément de frottement et la partie de paroi, le troisième élément élastique amenant la première face et la cinquième face à être pressées l'une contre l'autre et amenant la deuxième face et la septième face à être pressées l'une contre l'autre.

2. Amortisseur selon la revendication 1, dans lequel
le troisième élément élastique inclut une première partie d'extrémité en contact avec la partie de paroi et une seconde partie d'extrémité en contact avec l'un du premier élément de frottement et du second élément de frottement, et
la seconde partie d'extrémité est alignée dans la direction axiale avec la première face, la deuxième face, la cinquième face et la septième face.

3. Amortisseur selon la revendication 1, dans lequel le premier élément rotatif positionne le centre de rotation dans le premier élément de frottement, dans une direction radiale, et positionne le second élément de frottement dans la direction radiale.

4. Amortisseur selon l'une quelconque des revendications 1 à 3, dans lequel l'un du premier élément de frottement et du second élément de frottement est muni d'une partie évidée qui est évidée dans une direction s'éloignant de la partie de paroi à partir d'une face du côté de la partie de paroi de l'un du premier élément de frottement et du second élément de frottement, et qui reçoit le troisième élément élastique.

5. Amortisseur selon la revendication 1, dans lequel l'amortisseur peut être modifié entre un état dans lequel un espace existe entre la troisième face et la sixième face et un état dans lequel la troisième face et la sixième face sont en contact l'une avec l'autre, et peut être modifié entre un état dans lequel un espace existe entre la quatrième face et la huitième face et un état dans lequel la quatrième face et la huitième face sont en contact l'une avec l'autre.

6. Amortisseur selon la revendication 3, dans lequel
le premier élément de frottement inclut une neuvième face orientée vers l'extérieur dans la direction radiale,
le second élément de frottement inclut une dixième face orientée vers l'extérieur dans la direction radiale, et
le premier élément rotatif inclut une première partie périphérique intérieure et une seconde partie périphérique intérieure, la première partie périphérique intérieure étant en contact avec la neuvième face et positionnant le premier élément de frottement dans la direction radiale, la seconde partie périphérique intérieure étant en contact avec la dixième face et positionnant le second élément de frottement dans la direction radiale.
